# EUROPÄISCHE PATENTANMELDUNG

(11) **EP 2 392 456 A1**
(43) Veröffentlichungstag der Anmeldung: **07.12.2011**
(21) Anmeldenummer: 10005679.5
(22) Anmeldetag: 01.06.2010
(51) Int. Cl.: B32B 27/00

(54) **Styrolpolymerschaumstoff-Verbundkörper**

(71) Anmelder: Alporit AG, 5623 Boswil (CH)
(72) Erfinder: Jenni, Daniel, 6370 Oberdorf (CH); Simmler, Hans, 8636 Wald (CH)
(74) Vertreter: Luderschmidt, Schüler & Partner

(57) **Zusammenfassung**

Verbundkörper, umfassend mindestens zwei Styrolpolymerschaumstoffplatten und eine dazwischen liegende, ggf. vernetzte Heißschmelzklebstoffzusammensetzung, wobei die Heißschmelzklebstoffzusammensetzung mindestens ein thermoplastisches, bei 25°C festes, silangepfropftes Poly-α-olefin (P) umfasst, welches ggf. nachträglich vernetzt wurde.

Der Verbundkörper eignet sich insbesondere zum Isolieren von Gebäuden.

## Beschreibung

Die vorliegende Erfindung betrifft Styrolpolymerschaumstoff-Verbundkörper, insbesondere zum Isolieren von Gebäuden, bevorzugt zum Wärmedämmen von Gebäuden.

Aufgrund der immer knapper werdenden nicht erneuerbaren Energieträger, wie Kohle, Gas und Erdöl, und ihrer damit verbundenen Teuerung spielt die Wärmedämmung von Gebäuden eine immer größere Rolle. Hierfür werden insbesondere Kunststoffschaumplatten, bevorzugt Styrolpolymerschaumstoffplatten, eingesetzt, die zunächst mittels FCKW-haltiger Treibmittel hergestellt wurden. Diese Treibmittel sind jedoch wegen ihrer schädigenden Wirkung auf die Ozonschicht äußerst nachteilig.

Mit dem Einsatz von alternativen Treibmitteln haben sich bei der Herstellung dieser Kunststoffschaumplatten erhebliche Schwierigkeiten ergeben, die insbesondere mit größerer Plattendicke zunehmen. Weiterhin weisen die auf diese Weise erhältlichen Platten in der Regel schlechtere Wärmedämmeigenschaften auf, wobei dieser Effekt insbesondere für dicke Kunststoffschaumplatten zu beobachten ist.

Vor diesem Hintergrund schlägt das europäische Patent EP 1 213 118 B1 ein Verfahren für die Verbindung von mindestens zwei HFCKW-frei extrudierten Polystyrolschaumplatten als Ausgangsplatten zu neuen Platten mit einer Mindestdicke von 70 mm vor.

Eine Weiterentwicklung dieses Verfahrens wird im europäischen Patent EP 1 471 125 B1 beschrieben.

Beide Patente gehen zwingend davon aus, dass Sperrschichten innerhalb des verklebten Plattenverbundes, z. B. durch Extrusionshäute und/oder Kleberschichten, zu vermeiden sind und dass daher der Einsatz eines diffusionsoffenen Klebers nötig ist, ohne den Begriff der Diffusionsoffenheit genauer zu spezifizieren.

Die Vorgehensweise dieser Patente ist jedoch aus verschiedenen Gründen nachteilig.

Zum einen erfordert die vorgesehene Entfernung der Extrusionshaut einen weiteren Verfahrensschritt und verschlechtert auf diese Weise die Raum-Zeit-Ausbeute der genannten Verfahren. Weiterhin führt die Entfernung der Extrusionshaut zu einem signifikanten Materialverlust, der die Materialkosten und somit die Produktionskosten erhöht. Darüber hinaus müssen Sicherheitsvorkehrungen getroffen werden, um eine Gesundheitsbeeinträchtigung durch den bei der Entfernung der Extrusionshaut gebildeten Frässtaub zu vermeiden.

Ferner ist die Verwendung von Polyurethan-Klebern auf Isocyanatbasis, die im europäischen Patent EP 1 471 125 B1 beschrieben wird, aus umwelttechnischen Gesichtspunkten problematisch.

Darüber hinaus sind aus anderen Druckschriften halogenfreie, flammgeschützte Polymerschaumstoffe, insbesondere Polystyrol-Partikelschaumstoffe aus expandierbarem Polystyrol (EPS) oder Polystyrol-Extrusionsschaumstoffplatten (XPS) bereits bekannt und werden z. B. in der WO 20067027241 beschrieben. Hinweise auf die Verklebung der XPS-Platten oder die Isolierung von Gebäuden, sind der Druckschrift allerdings nicht zu entnehmen.

Ferner werden Heißschmelzklebstoffzusammensetzungen, enthaltend mindestens ein thermoplastisches, bei 25°C festes silangepfropftes Poly-α-olefin, bereits in den Druckschriften WO 2009/133093 und EP 2,075,297 A1 beschrieben. Sie werden in diesen Dokumenten zur Verklebung von Polyolefin-Folien verwendet. Hinweise auf die Verklebung von Styrolpolymerschaumstoffen oder die Isolierung von Gebäuden sind den Druckschriften allerdings nicht zu entnehmen.

Aufgabe der vorliegenden Erfindung war es daher, bessere Möglichkeiten zur Isolierung, insbesondere zur Wärmedämmung von Gebäuden, aufzuzeigen. Dabei wurde insbesondere eine Verbesserung der Langzeit-Isoliereigenschaften, insbesondere der Langzeit-Dämmeigenschaften, gewünscht. Darüber hinaus sollte die Lösung der zugrundeliegenden Aufgabe auf möglichst einfache Art und Weise realisiert werden können. Gewünscht waren in diesem Zusammenhang insbesondere eine möglichst gute Raum-Zeit-Ausbeute und eine möglichst hohe Effizienz sowie eine aus gesundheitspolitischen und umweltpolitischen Gründen möglichst unbedenkliche Vorgehensweise.

Gelöst werden diese sowie weitere Aufgaben, die sich aus den dargelegten Überlegungen zwangsläufig ergeben, durch die Bereitstellung eines Verbundkörpers mit allen Merkmalen des vorliegenden Anspruchs 1. Die auf Anspruch 1 rückbezogenen Unteransprüche beschreiben besonders vorteilhafte Ausführungsformen des Verbundkörpers. Die übrigen Ansprüche betreffen besonders günstige Wege zur Herstellung des erfindungsgemäßen Verbundkörpers sowie besonders zweckmäßige Anwendungsgebiete.

Durch die Bereitstellung eines Verbundkörpers, umfassend mindestens zwei Styrolpolymerschaumstoffplatten und eine dazwischen liegende, ggf. vernetzte Heißschmelzklebstoffzusammensetzung, wobei die Heißschmelzklebstoffzusammensetzung mindestens ein thermoplastisches, bei 25°C festes, silangepfropftes Poly-α-olefin (P) umfasst, welches ggf. nachträglich vernetzt wurde, gelingt es auf nicht ohne Weiteres vorhersehbare Weise, die Isolierung von Gebäuden, insbesondere die Wärmedämmung von Gebäuden und dabei die Langzeit-Isoliereigenschaften, insbesondere die Langzeit-Dämmeigenschaften zu verbessern.

Es hat sich gezeigt, dass die zusammengesetzten Styrolpolymerschaumstoffplatten der vorliegenden Erfindung eine wesentlich bessere Isolierung, insbesondere Wärmeisolierung, als einstückig geschäumte, dicke Styrolpolymerschaumstoffplatten erlauben. Wahlweise kann das genutzt werden, um geringere Plattendicken mit gleicher Isolierwirkung, insbesondere gleicher Wärmeisolierung, anzubieten. Die geringere Plattendicke hat noch wesentliche bauliche Vorteile.

Darüber hinaus sind die Vorteile des Verbundkörpers der vorliegenden Erfindung insbesondere bei beiderseitiger Feuchtigkeitseinwirkung auf eine mindestens dreischichtige Platte zu beobachten. Hier verlangsamen die zusätzlichen Diffusionsbremsschichten in der Platte, d. h. die Klebstoffschicht und bevorzugt die Extrusionshäute der Ausgangsplatten, eine Feuchtigkeitsanreicherung im Kernbereich der Platte, die die Isoliereigenschaften des Verbundkörpers herabsetzen würde.

Weiterhin können die erfindungsgemäßen Verbundkörper auf vergleichbar einfache Art und Weise hergestellt und verwendet werden. Sie erlauben insbesondere eine Herstellung mit sehr hoher Raum-Zeit-Ausbeute und einer sehr guten Effizienz.

Darüber hinaus ist das erfindungsgemäße Verfahren zur Herstellung der Verbundkörper aus gesundheitspolitischen sowie aus umweltpolitischen Gründen absolut unbedenklich. Die erfindungsgemäß einzusetzende Heißschmelzklebstoffzusammensetzung ist durch die Abwesenheit von Isocyanaten aufgrund von Aspekten der Arbeitshygiene und -sicherheit besonders vorteilhaft.

Ferner hat sich gezeigt, dass die erfindungsgemäß einzusetzende Heißschmelzklebstoffzusammensetzung auch in dünnen Schichten eine verlängerte Offenzeit, d. h. eine Offenzeit von typischerweise mehreren, insbesondere von 3 bis 10 Minuten aufweisen, während der ein Fügen mit einem Fügepartner gut möglich ist. Der Klebstoff ist in der Lage, während der Offenzeit die Oberflächen der Fügepartner gut zu benetzen. Zudem baut sich schnell eine Frühfestigkeit auf, welche es erlaubt. dass der gebildete Klebverbund innerhalb kurzer Zeit in der Lage ist, Kräfte zu einem gewissen Maß zu übertragen. Als dünne Schichten werden in dem vorliegenden Dokument Klebstoffschichtdicken von weniger als 1 mm, typischerweise von 0,05 bis 0,5 mm, insbesondere um 0,1 mm, verstanden. Durch die Wasser-bedingte Vernetzungsreaktion lassen sich schließlich sehr hohe Endfestigkeiten erreichen, welche typischerweise 1 bis 2 MPa betragen.

Insbesondere ist durch die verlängerte Offenzeit ein mit anderen Klebern vielfach benötigtes "Reaktivieren" (Wiederaufschmelzen) des Klebstoffs vor dem Fügen mit der Oberfläche des Fügepartners nicht mehr nötig. Dies führt zu einem stark vereinfachten Klebeprozess, was zusätzlich auch finanziellen Anreiz schafft, den vorliegend beschriebenen Klebstoff einzusetzen.

Es hat sich zudem gezeigt, dass die beschriebene Heißschmelzklebstoffzusammensetzung sehr lagerstabil ist, über gute Verarbeitungseigenschaften, insbesondere im Applikationstemperaturbereich von 100°C bis 200°C, aufweist und bei diesen Temperaturen auch über längere Zeit viskositätsstabil ist. Die Aushärtung erfolgt geruchsfrei, schnell und auch bei dickschichtigen Anwendungen ohne Blasen. Der Klebstoff zeichnet sich über gute Haftung und eine gute Beständigkeit gegenüber Umwelteinflüssen aus.

Zusätzlich haben sich erhebliche Fertigungsvorteile der erfindungsgemäßen Verbundkörper gegenüber einstückig geschäumten Styrolpolymerschaumstoffplatten ergeben, die aus einer geringeren notwendigen Lagerzeit resultieren. Je dicker die Platten sind, desto länger müssen die Platten lagern, um Schrumpf und Dehnung sowie ein Schüsseln der Platten auf ein zulässiges Maß zu verringern. Die Lagerzeit kann für dicke einstückige Styrolpolymerschaumstoffplatten 6 Monate und mehr betragen. Das erfordert eine riesige Lagerkapazität und extreme Lagerkosten.

Die notwendige Lagerzeit der erfindungsgemäßen Verbundkörper ist nur ein Bruchteil der herkömmlich erforderlichen Lagerzeit bei gleicher Dicke.

Die Herstellung der erfindungsgemäßen Verbundkörper aus Ausgangsplatten kleinerer Dicke hat überraschender Weise noch weitere Vorteile, denn es reduziert sich die Anzahl der zu extrudierenden Dickenformate. Z.B. lassen sich aus 60iger Platten (die Zahl bezeichnet im folgenden die Dicke in mm) eine 120iger Platte oder eine 180iger Platte oder eine 240iger Platte herstellen; aus einer 50iger Platte eine 100eter Platte, eine 150iger Platte, eine 200eter Platte oder eine 250iger Platte. In den beschriebenen Fällen ergeben sich aus einem einzigen Dickenformat durch Doppelung Verbindung bereits drei bzw. vier weitere handelsübliche Dickenformate. Es können auch unterschiedlich dicke Platten miteinander kombiniert werden, z.B. 50iger und 60iger Platen oder 40iger und 50iger Platten.

Der Verbundkörper der vorliegenden Erfindung umfasst mindestens zwei Styrolpolymerschaumstoffplatten, welche grundsätzlich keinen weiteren Beschränkungen unterliegen.

Platten bezeichnen im Sinne der vorliegenden Erfindung insbesondere flache, vorzugsweise überall gleich dicke, auf zwei gegenüberliegenden Seiten von je einer im Verhältnis zur Dicke sehr ausgedehnte ebene Flächen begrenzte Formkörper, die vorzugsweise eine Würfel- oder eine Quaderform aufweisen. Die zwei sich gegenüberliegenden Seiten sind vorzugsweise quadratisch oder rechteckig ausgebildet und weisen vorzugsweise eine Fläche größer 100 cm², insbesondere größer 1000 cm², auf. Die Dicke der Platten ist vorzugsweise kleiner 101 mm, insbesondere kleiner 81 mm.

Für die Zwecke der vorliegenden Erfindung bevorzugte Styrolpolymere umfassen sowohl Styrolhomopolymere als auch Styrolcopolymere. Hierzu gehören insbesondere glasklares Polystyrol (GPPS), Schlagzähpolystyrol (H1PS), anionisch polymerisiertes Polystyrol oder Schlagzähpolystyrol (A-IPS), Styrol-α-Methylstyrol-copolymere, Acrylnitril-Butadien-Styrolpolymerisate (ABS), Styrol-Acrylnitril (SAN) Acrylnitril-Styrol-Acrylester (ASA), Methyacrylat-Butadien-Styrol (MBS), Methylmethacrylat-Acrylnitril-Butadien-Styrol (MABS)- polymerisate oder Mischungen davon oder mit Polyphenylenether (PPE). Styrolhomopolymere haben sich jedoch besonders bewährt.

Für die Zwecke der vorliegenden Erfindung ganz besonders günstig ist der Einsatz von Schaumstoffplatten aus expandierbaren Styrolpolymeren (EPS) oder aus Styrolpolymerextrusionschaumstoffen (XPS).

Die Styrolpolymerschaumstoffe weisen bevorzugt eine Dichte im Bereich von 8 bis 200 g/l, besonders bevorzugt im Bereich von 10 bis 50 g/l auf und sind bevorzugt zu mehr als 80 %, besonders bevorzugt zu 95 bis 100% geschlossenzellig.

Die erfindungsgemäß einzusetzenden Styrolpolymerschaumstoffplatten, insbesondere aus expandierbaren Styrolpolymeren (EPS) oder aus Styrolpolymerextrusionschaumstoffen (XPS), werden bevorzugt durch Einmischen eines Treibmittels in die Polymerschmelze und anschließende Extrusion zu Schaumstoffplatten, Schaumstoffsträngen, oder expandierbaren Granulaten hergestellt, wobei in den letzteren Fällen die Schaumstoffplatten aus den Schaumstoffsträngen oder expandierbaren Granulaten in an sich bekannter Weise erhalten werden.

Bei der Herstellung der Platten können der Styrolpolymerschmelze auch Polymerrecyklate der genannten thermoplastischen Polymere, insbesondere Styrolpolymere und expandierbare Styrolpolymere (EPS) in Mengen zugemischt werden, die deren Eigenschaften nicht wesentlich verschlechtern, in der Regel in Mengen von maximal 50 Gew.-%, insbesondere in Mengen von 1 bis 20 Gew.-%.

Im Rahmen der vorliegenden Erfindung umfasst der erfindungsgemäße Verbundkörper weiterhin mindestens eine ggf. vernetzte Heißschmelzklebstoffzusammensetzung, die zwischen zwei Styrolpolymerschaumstoffplatten angeordnet ist. Dabei enthält die Heißschmelzklebstoffzusammensetzung mindestens ein thermoplastisches, silangepfropftes Poly-α-olefin (P), welches bei 25°C fest ist.

Unter einem "α-Olefin" wird ein Alken der Summenformel CₓH₂ₓ (x entspricht der Anzahl Kohlenstoffatome) verstanden, welches eine C-C-Doppelbindung am ersten Kohlenstoffatom (α-Kohlenstoff) aufweist. Bevorzugte α-Olefine sind Ethylen, Propylen, 1-Buten, 1-Penten, 1-Hexen, 1-Hepten und 1-Octen. Somit stellen beispielsweise weder 1,3-Butadien noch 2-Buten oder Styrol α-Olefine im Sinne dieses Dokumentes dar.

Unter "Poly-α-olefinen" werden Homopolymere aus α-Olefinen und Copolymere aus mehreren verschiedenen α-Olefinen verstanden.

"Feste" Substanzen bezeichnen im Rahmen der vorliegenden Erfindung alle Substanzen im festen Aggregatzustand, die sowohl ein definiertes Volumen als auch eine definierte Form aufweisen und die Änderungen der Gestalt, beispielsweise durch Deformation, Zerkleinern o. ä., großen Widerstand entgegensetzen. Die festen Substanzen weisen vorzugsweise eine dynamische Viskosität größer 10⁶ Pa s, bevorzugt größer 10⁹ Pa s, besonders bevorzugt größer 10¹² Pa s, insbesondere größer 10¹⁴ Pa s, auf, jeweils gemessen bei 25°C und einer Frequenz von 1 Hz.

Bevorzugt weist das silangepfropfte Poly-α-olefin (P) eine Erweichungstemperatur zwischen 70°C und 150°C, insbesondere zwischen 80°C und 120°C, bevorzugt zwischen 90°C und 110°C, auf. Die Erweichungstemperatur wird hierbei vorzugsweise nach der Ring & Kugel-Methode, z. B. in Anlehnung an DIN EN 1238, ermittelt und bezieht sich vorzugsweise auf das unvernetzte Poly-α-olefin (P).

Derartige silangepfropfte Poly-α-olefine (P) sind dem Fachmann bestens bekannt. Sie lassen sich beispielsweise durch eine Aufpfropfung von ungesättigtem Silan, wie Vinyltrimethoxysilan, auf ein Poly-α-olefin erhalten. Eine detaillierte Beschreibung zur Herstellung besonders geeigneter silangepfropfter Poly-α-olefine wird beispielsweise im Patent US 5,994,747 und in der Patentanmeldung DE 40 80 695 A1 beschrieben, deren Inhalt hiermit in die vorliegende Anmeldung mit eingeschlossen ist.

Ganz besonders bevorzugt ist das silangepfropfte Poly-α-olefin (P) ein silangepfropftes Polyethylen oder Polypropylen.

Darüber hinaus sind auch silangepfropfte Poly-α-olefine besonders vorteilhaft, welche mittels Metallocen-Katalysatoren hergestellte Poly-α-olefine sind, auf welche Silangruppen aufgepfropft wurden. Insbesondere sind dies silangepfropfte Polypropylen-Homopolymere oder Polyethylen-Homopolymere.

Der Pfropfungsgrad des silangepfropften Poly-α-olefins (P) ist vorteilhaft über 1 Gew.-%, insbesondere über 3 Gew.-%, Silan, bezogen auf das Gewicht des Poly-α-olefins. Vorzugsweise beträgt dieser Pfropfungsgrad zwischen 2 und 15 Gew.-%, bevorzugt zwischen 4 und 15 Gew.-%, meist bevorzugt zwischen 8 und 12 Gew.-%. Wenn für das silangepfropfte Poly-α-olefin über Metallocen-Katalysatoren hergestellte Poly-α-olefine verwendet werden, betragt der Pfropfungsgrad vorzugsweise zwischen 8 und 12 Gew.-%.

Günstigerweise umfasst die Heißschmelzklebstoffzusammensetzung mindestens zwei verschiedene silangepfropfte Poly-α-olefine (P).

Der Anteil aller silangepfropften Poly-α-olefine (P), bezogen auf die Heißschmelzklebstoffzusammensetzung, beträgt vorzugsweise mehr als 50 Gew.-%, bevorzugt zwischen 60 und 90 Gew.-%.

Es hat sich gezeigt, dass es vorteilhaft ist, wenn die Heißschmelzklebstoffzusammensetzung weiterhin ein bei Raumtemperatur (25°C) festes thermoplastisches Poly-α-olefin (P'), insbesondere ein ataktisches Poly-α-olefin (APAO), enthält.

Diese ataktischen Poly-α-olefine lassen sich durch Polymerisation von α-Olefinen, insbesondere von Ethen, Propen, 1-Buten beispielsweise mit Ziegler-Katalysatoren herstellen. Es lassen sich Homopolymere oder Copolymere von α-Olefinen herstellen. Sie weisen gegenüber anderen Polyolefinen eine amorphe Struktur auf. Bevorzugt weisen die festen thermoplastischen ataktischen Poly-α-olefine (P') einen Erweichungspunkt von über 90°C, insbesondere zwischen 90°C und 130°C auf. Das Molekulargewicht Mₙ ist vorzugsweise im Bereich von 7.000 bis 25.000 g/mol. Es kann vorteilhaft sein, wenn für die Herstellung der ataktischen Poly-α-olefine (P') Metallocen-Katalysatoren verwendet werden.

Besonders bevorzugt ist das Gewichtsverhältnis von festem silangepfropften Poly-α-olefin (P) zu festem thermoplastischen Poly-α-olefin (P') zwischen 25:1 und 1:25, insbesondere zwischen 1:1 und 20:1. Als besonders geeignet gezeigt hat sich ein Anteil an festem thermoplastischen Poly-α-olefin (P') von 5 bis 40 Gew.-%, bevorzugt 15 bis 35 Gew.-%, bezogen auf die Heißschmelzklebstoffzusammensetzung.

Im Rahmen einer besonders bevorzugten Ausführungsform der vorliegenden Erfindung enthält die Heißschmelzklebstoffzusammensetzung weiterhin mindestens ein Weichharz (WH) mit einem Schmelzpunkt oder Erweichungspunkt zwischen -10°C und 40°C. Aufgrund der Tatsache, dass sich das Weichharz (WH) bei Raumtemperatur (25°C) sehr nahe am Schmelz- oder Erweichungspunkt befindet, ist es bei Raumtemperatur entweder bereits flüssig oder sehr weich. Ein Weichharz kann ein natürliches Harz oder synthetisches Harz sein.

Insbesondere sind derartige Weichharze (WH) mittel- bis höhermolekulare Verbindungen aus den Klassen der Parafin-, Kohlenwasserstoffharze, Polyolefine, Polyester, Polyether, Polyacrylate oder Aminoharze.

Das Weichharz (WH) weist vorzugsweise einen Schmelzpunkt oder Erweichungspunkt zwischen 0°C und 25°C, insbesondere 10°C und 25°C, auf.

Zweckmäßigerweise ist das Weichharz (WH) ein Kohlenwasserstoffharz, insbesondere ein aliphatisches C₅-C₉-Kohlenwasserstoffharz.

Besonders geeignet als Weichharz (WH) hat sich ein aliphatisches C₅-Kohlenwasserstoffharz gezeigt, welches unter dem Handelsnamen Wingtack® von der Firma Cray Valley kommerziell vertrieben wird. Weitere geeignete Weichharze sind beispielsweise Polyterpenharze, wie sie beispielsweise als Sylvares® TR 425 von Arizona Chemical, USA, kommerziell vertrieben werden, Rosinester und Tallharzester, wie sie beispielsweise als Sylvatac® RE 12, Sylvatac® RE 10, Sylvatac® RE 15, Sylvatac® RE 20, Sylvatac® RE 25 oder Sylvatac® RE 40 von Arizona Chemical, USA, kommerziell vertrieben werden. Weitere geeignete Weichharze sind beispielsweise Escorez™ 5040 (Exxon Mobil Chemical). Als Weichharze weiter geeignete Kohlenwasserstoffharze sind beispielsweise Picco A 10 (Eastman Kodak) und Regalite R1010 (Eastman Kodak).

Der Anteil aller Weichharze (WH) beträgt vorzugsweise 20 - 40 Gew.-%, insbesondere 25 - 35 Gew.-%, bezogen auf die Heißschmelzklebstoffzusammensetzung.

Es hat sich zudem gezeigt, dass es vorteilhaft ist, wenn das Gewichtsverhältnis aller Weichharze (WH) zu allen silangepfropften Poly-α-olefinen (P) kleiner als 0,5 ist. Bevorzugt ist dieses Gewichtsverhältnis zwischen 0,2 und 0,4 und meist bevorzugt zwischen 0,3 und 0,4.

Im Rahmen einer weiteren besonders bevorzugten Ausführungsform der vorliegenden Erfindung umfasst die Heißschmelzklebstoffzusammensetzung bevorzugt mindestens einen bei 25°C festen thermoplastischen Polyester (TPE) und bevorzugt mindestens ein Amid (A) der Formel (I) oder (II).

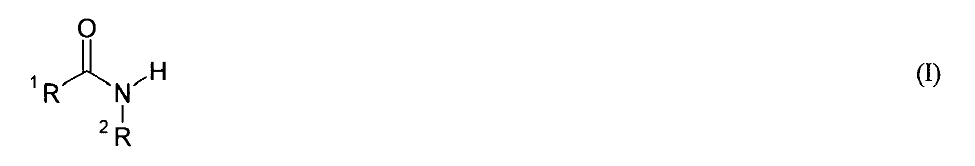

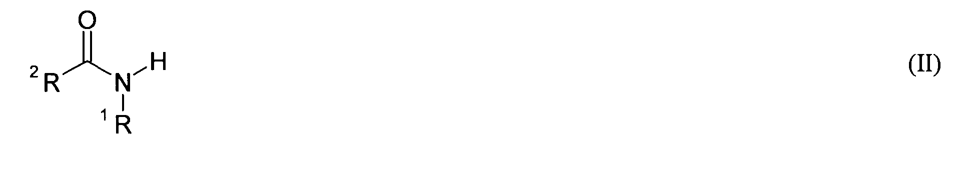

Hierbei steht R¹ für H, eine C₁-C₄-Alkylgruppe oder eine Benzylgruppe und R² steht für eine gesättigte oder ungesättigte C₈-C₂₂-Alkylgruppe.

Unter ungesättigt werden hierbei Reste enthaltend Kohlenstoff-Kohlenstoff-Doppel- oder Dreifachbindungen verstanden. Die Reste können auch mehrfach ungesättigt sein, d. h. es können auch mehrere solche Doppel- und/oder Dreifachbindungen im demselben Rest vorhanden sein. Falls dies der Fall ist, können diese Mehrfachbindungen konjugiert zueinander oder isoliert voneinander vorhanden sein. Die Reste R¹ und/oder R² können unabhängig voneinander verzweigt oder unverzweigt sein. Bevorzugt sind die Reste jedoch unverzweigt. Insbesondere Verzweigungen in unmittelbarer Nähe der Amidgruppe sind nachteilig. Somit ist bevorzugt, dass der Kohlenstoff, welcher direkt verbunden mit dem Stickstoffatom, respektive dem Kohlenstoffatom, der Amidgruppe ist, ein Wasserstoffatom-tragender Kohlenstoff ist, insbesondere ein Methylenkohlenstoff ist. Die Reste R² der Amide der Formel (I) weisen bevorzugt eine ungerade Anzahl Kohlenstoffatome auf, während die Reste R² der Amide der Formel (II) bevorzugt eine gerade Anzahl Kohlenstoffatome aufweist.

Bevorzugt weist das Amid (A) einen Schmelzpunkt zwischen 40°C und 150°C, bevorzugt zwischen 50°C und 110°C, auf.

In einer bevorzugten Variante der Erfindung ist das Amid (A) ein Amid der Formel (I).

Bevorzugte Amide (A) der Formel (I) weisen ein H als Substituenten R¹ auf. Diese Verbindungsklasse der primären Amide sind dem Fachmann unter dem Begriff "Fettsäureamide" bekannt. Allerdings sind nicht alle Fettsäureamide gleich gut geeignet. Insbesondere Fettsäuren mit einem Alkylrest von mehr als 22 Kohlenstoffatomen sind nicht geeignet. Solche Fettsäureamide R²CONH₂ lassen sich beispielsweise durch die Reaktion von den entsprechenden Fettsäuren R²COOH mit Ammoniak umsetzen.

Die Amide (A) der Formel (I), in denen R¹ einen C₁-C₄-Alkylrest oder einen Benzylrest darstellen, lassen sich beispielsweise durch N-Alkylierungen des entsprechenden Fettsäureamids R²CONH² mittels Alkylhalogenen herstellen oder lassen sich aus der Umsetzung eines C₁-C₄-Alkylamins oder Benzylamins mit der entsprechenden Fettsäure R²COOH erhalten.

In einer weiteren bevorzugten Variante der Erfindung ist das Amid (A) ein Amid der Formel (II). Solche Amide lassen sich aus der Umsetzung von Fettsäureaminen R²NH₂ mit der jeweiligen Carbonsäure R¹COOH, respektive der jeweiligen Säurechloride R¹COCl, herstellen. Die hierfür eingesetzten Fettamine ihrerseits werden üblicherweise durch Reduktion aus den entsprechenden Fettsäureamiden oder direkt aus den entsprechenden Fettsäuren hergestellt.

Bei den Amiden (A) handelt es sich bevorzugt um technische Gemische von Amiden mit unterschiedlich langen Resten R², R³ oder R⁴, insbesondere um technische Gemische von Fettsäureamiden.

In einer Ausführungsform ist der Rest R² insbesondere ein ungesättigter C₈-C₂₀-Alkylrest, insbesondere ein CₙH₂ₙ₋₁-Alkylrest oder CₙH₂ₙ₋₃-Alkylrest oder CₙH₂ₙ₋₅-Alkylrest mit n = 8 - 20, bevorzugt ein olefinisch ungesättigter Alkylrest.

In einer anderen Ausführungsform ist der Rest R² ein C₈-C₂₂-Alkylrest, insbesondere ein C₁₅-C₂₂-Alkylrest.

Besonders bevorzugte Amide (A) der Formel (I) sind ausgewählt aus der Gruppe bestehend aus Lauryl-, Myristin-, Palmitin-, Stearin-, Arachin-, Tubercolostaearin-, Palmitolein-, Öl-, Linol-, Linolen-, Elaseostearin-, Eruca- und Arachidonsäureamid.

Bevorzugt sind Amide (A) der Formel (I), insbesondere Stearinsäureamid oder Erucamid. Das bevorzugteste Amid (A) ist Erucamid.

Die Einsatzmenge von Amid (A) ist vorteilhaft derart, dass die Heißschmelzklebstoffzusammensetzung eine Menge von mindestens 5 Gew.-%, insbesondere von 5,0 - 20,0 Gew.-%, bevorzugt 7,0 - 15,0 Gew.-%, bezogen auf die Heißschmelzklebstoffzusammensetzung, aufweist.

Die Einsatzmenge von thermoplastischen, silangepfropften Polyolefin (P) ist im Rahmen dieser bevorzugten Ausführungsform vorteilhaft derart, dass die Heißschmelzklebstoffzusammensetzung eine Menge von mindestens 50 Gew.-%, insbesondere von 50 - 95 Gew.-%, bevorzugt 60 - 80 Gew.-%, bezogen auf die Heißschmelzklebstoffzusammensetzung, an thermoplastischen, silangepfropften Polyolefin (P) aufweist.

Die Einsatzmenge des mindestens einen bei 25°C festen thermoplastischen Polyester (TPE) ist vorteilhaft im Bereich von 5 - 30 Gew.-%, bevorzugt von 7 - 15 Gew.-%, bezogen auf die Heißschmelzklebstoffzusammensetzung.

Der thermoplastische Polyester (TPE) ist vorzugsweise bei Raumtemperatur (25°C) fest. Bevorzugt werden kristalline, vorzugsweise aromatische, thermoplastische Polyester (TPE). Besonders geeignete derartige thermoplastische Polyester (TPE) sind Polycaprolacton-Copolyester-Urethane. Sie weisen insbesondere einen Schmelzflussindex (DIN 53.735) von mehr als 15 g / 10 min, bevorzugt von 25 - 100 g / 10 min, (170°C, 2,16 kg) und insbesondere eine OH-Zahl von weniger als 5 mg KOH/g, bevorzugt von weniger als 4 mg KOH/g, auf.

Die Heißschmelzklebstoffzusammensetzung kann unabhängig von den zuvor genannten optionalen Bestandteilen bei Bedarf zusätzlich weitere thermoplastische Polymere aufweisen. Dies sind insbesondere thermoplastische Polyester (TPE), thermoplastische Polyurethane (TPU) sowie Homo- oder Copolymere von mindestens einem Monomer, welches ausgewählt ist aus der Gruppe bestehend aus Ethylen, Propylen, Butylen, Isobutylen, Isopren, Vinylacetat, Vinylester höherer Carbonsäuren und Ester der (Meth)acrylsäure. Insbesondere geeignet als derartiges zusätzliches thermoplastisches Polymer sind Ethylenvinylacetat-Copolymere (EVA). Selbstverständlich können auch diese thermoplastischen Polymere gepfropft sein.

Die Heißschmelzklebstoffzusammensetzung enthält weiterhin bevorzugt mindestens einen Katalysator, welcher die Reaktion von Silangruppen katalysiert, insbesondere in einer Menge von 0,01 - 1,0 Gew.-%, bevorzugt von 0,01 - 0,5 Gew.-%, bezogen auf die Heißschmelzklebstoffzusammensetzung. Besonders geeignete Katalysatoren umfassen insbesondere Zinn-organische Verbindung, bevorzugt Dibutylzinndilaurat (DBTL).

Als weitere Bestandteile geeignet sind insbesondere Bestandteile, welche ausgewählt sind aus der Gruppe umfassend Weichmacher, Haftvermittler, UV-Absorptionsmittel, UV- und Wärmestabilisatoren, optische Aufheller, Fungizide, Pigmente, Farbstoffe, Füllstoffe und Trocknungsmittel.

Es hat sich jedoch gezeigt, dass es besonders vorteilhaft ist, wenn die Gewichtssumme aller thermoplastischen, bei 25°C festen silangepfropften Poly-α-olefine (P), aller gegebenenfalls vorhandenen Weichharze (WH) und aller gegebenenfalls vorhandenen festen thermoplastischen Poly-α-olefine (P') mehr als 80 Gew.-%, bevorzugt mehr als 90 Gew.-%, der Heißschmelzklebstoffzusammensetzung beträgt.

Der Feststoffgehalt der Heißschmelzklebstoffzusammensetzung is zweckmäßigerweise größer 80 Gew.-%, bevorzugt größer 90 Gew.-%, insbesondere 100 Gew.-%.

Als besonders vorteilhaft haben sich Heißschmelzklebstoffzusammensetzungen erwiesen, welche im Wesentlichen aus thermoplastischem, bei 25°C festen silangepfropften Poly-α-olefin (P), gegebenenfalls Weichharz (WH), gegebenenfalls festem thermoplastischen Poly-α-olefin (P'), sowie Katalysator, welcher die Reaktion von Silangruppen katalysiert, bestehen.

Weiterhin weist die Heißschmelzklebstoffzusammensetzung bei 25°C vorzugsweise eine Dichte im Bereich von 0,80 bis 0,95 kg/l, insbesondere im Bereich von 0,85 bis 0,90 kg/l, auf.

Unter dem Einfluss von Wasser, insbesondere in Form von Luftfeuchtigkeit, hydrolysieren die Silangruppen des silangepfropften Poly-α-olefins (P) zu Silanolgruppen (-SiOH), welche ihrerseits miteinander reagieren und so unter Bildung von Siloxangruppen (-Si-O-Si-) zur Vernetzung der Heißschmelzklebstoffzusammensetzung führen. Derartige Heißschmelzklebstoffzusammensetzungen werden als reaktive Heißschmelzklebstoffe bezeichnet.

Es ist deshalb vorteilhaft, darauf zu achten, dass zur Herstellung der Heißschmelzklebstoffzusammensetzung Rohstoffe verwendet die möglichst gut getrocknet sind und dass die Klebstoffe während der Herstellung, Lagerung und Applikation möglichst vor dem Kontakt mit Wasser oder Luftfeuchtigkeit geschützt werden.

Im Rahmen der vorliegenden Erfindung führt die Vernetzung der Heißschmelzklebstoffzusammensetzung vorzugsweise zu einer nicht diffusionsoffenen Sperrschicht zwischen den Platten, die das Eindringen von Wasser in den Kernbereich des Verbundkörpers verhindert.

Erfindungsgemäß wird die Diffusionsoffenheit der Sperrschicht mit Bezug zu DIN 4108-3 vorzugsweise in Anlehnung an EN ISO 7783-2 ermittelt. Die Dicke der zu untersuchenden Probe beträgt vorzugsweise 1 mm. Die Messung erfolgt vorzugsweise in einem Trockenklima (zwischen 0 % und 65 % relative Luftfeuchtigkeit bei 20°C). Für die Zwecke der vorliegenden Erfindung ist der s_{D}-Wert (Wasserdampfdiffusionsäquivalente Luftschichtdicke) der Sperrschicht vorzugsweise größer 0,5 m, bevorzugt größer 0,7 m, insbesondere größer 0,8 m.

Die Herstellung der erfindungsgemäß einsetzbaren Heißschmelzklebstoffe kann auf übliche, dem Fachmann bekannte Art und Weise erfolgen.

Die Verbundkörper der vorliegenden Erfindung unterliegen grundsätzlich keinen weiteren Beschränkungen. So können sie beispielsweise mehr als zwei Styrolpolymerplatten umfassen, zwischen denen zweckmäßigerweise jeweils eine Heißschmelzklebstoffzusammensetzung der vorstehend beschriebenen Art angeordnet ist.

Weiterhin kann die Dicke der Verbundkörper grundsätzlich frei gewählt werden. Allerdings sind die Vorteile der vorliegenden Erfindung insbesondere bei dicken Verbundkörpern zu beobachten, die vorzugsweise eine Dicke von mindestens 70 mm, gemessen senkrecht zur Flächennormalen der Klebstoffschicht und/oder der Platten, aufweisen.

Das Verkleben der Styrolpolymerschaumstoffplatten kann ebenfalls auf an sich bekannte Weise erfolgen. Besonders bewährt hat sich jedoch ein Verfahren, bei welchem man
(i) eine Heißschmelzklebstoffzusammensetzung aufschmilzt und/oder in einen fließfähigen Zustand überführt, die mindestens ein bei 25°C festes, silangepfropftes Poly-α-olefin (P) umfasst,
(ii) die geschmolzene Heißschmelzklebstoffzusammensetzung auf einer ersten Styrolpolymerschaumstoffplatte aufbringt,
(iii) die geschmolzene Heißkleberzusammensetzung auf der der ersten Platte abgewandten Seite mit einer zweiten Styrolpolymerschaumstoffplatte in Kontakt bringt,
(iv) die geschmolzene Heißschmelzklebstoffzusammensetzung ggf. auskühlen und aushärten lässt, bevorzugt indem man die Heißschmelzkleberzusammensetzung nachträglich vernetzt.

Vorzugsweise wird die Heißschmelzklebstoffzusammensetzung durch Aufheizen verflüssigt, indem man die thermoplastischen Inhaltsstoffe aufschmilzt und/oder in einen fließfähigen Zustand überführt. Die Viskosität der Heißschmelzklebstoffzusammensetzung sollte dabei auf die Applikationstemperatur angepasst werden. Vorzugsweise ist die Applikationstemperatur 100°C bis 200°C. Bei dieser Temperatur ist der Klebstoff gut verarbeitbar. Die Viskosität beträgt vorzugsweise in diesem Temperaturbereich 1.500 mPas - 50.000 mPas, insbesondere 2.000 mPas - 50.000 mPas, vorzugsweise gemessen bei einer Frequenz von 1 Hz. Ist sie wesentlich höher, ist die Applikation sehr schwierig. Ist sie wesentlich tiefer, ist der Klebstoff so dünnflüssig, so dass er bei der Applikation von der zu verklebenden Werkstoffoberfläche wegläuft, bevor er aufgrund des Abkühlens sich verfestigt.

Im Übrigen kann die Heißschmelzklebstoffzusammensetzung auf an sich bekannte Weise aufgebracht werden, insbesondere durch Kaschieren, vorzugsweise als Film (Spaltmaß vorzugsweise 0,1 mm - 1 mm), Punkt oder Raupe, oder durch Sprühenverfahren. Dabei wird für den Einsatz in automatisierten Anlagen die Verwendung geeigneter Filtersysteme empfohlen.

Zum Auftragen der Heißschmelzklebstoffzusammensetzung eignen sich insbesondere Klebewalzen oder Düsen, aus denen die Heißschmelzklebstoffzusammensetzung aufgesprüht wird. Mit den Walzen lässt sich jede gewünschte Verteilung (sowohl hinsichtlich der flächenmäßigen Ausdehnung als auch hinsichtlich der Dicke des Auftrages) der Heißschmelzklebstoffzusammensetzung auf die Berührungsflächen herbeiführen. Der Auftrag kann dabei wie ein Farbauftrag gehandhabt werden. In dem Sinne sind anstelle der Walzen auch Auftragsplatten nach dem Vorbild von Druckplatten geeignet.

Düsen sind im Rahmen der vorliegenden Erfindung als Klebewerkzeug besonders geeignet. In der beheizten Düse ist die Heißschmelzklebstoffzusammensetzung bei entsprechender Erwärmung so dünnflüssig, dass er als Flüssigkeit aufgesprüht werden kann. Die Heißschmelzklebstoffzusammensetzung kann dabei in der Form von Tröpfchen oder als Strahl gesprüht werden. Zur Erreichung eines teilflächigen Klebstoffauftrages können die Kleberstrahlen in Abständen voneinander und die Tröpfchen in entsprechender Streuung aufgetragen werden. Es kann auch ein Aufstrich mittels Quast oder dergleichen erfolgen. Ein vollflächiger Auftrag wird jedoch im Rahmen der vorliegenden Erfindung besonders bevorzugt, da er zur Ausbildung einer Sperrschicht im Verbundkörper führt, die das Eindringen von Feuchtigkeit in den Kernbereich des Verbundkörpers verlangsamen kann. Weiter verhindert der vollflächige Auftrag ebenfalls das stirnseitige Eindringen von Wasser in die Klebefuge.

Die Klebstoffmenge kann prinzipiell frei gewählt und auf die jeweilige Anwendung gezielt angepasst werden. Für die Zwecke der vorliegenden Erfindung besonders vorteilhafte Auftragsmengen an Heißschmelzklebstoffzusammensetzung liegen jedoch im Bereich von 40 g bis 250 g Heißschmelzklebstoffzusammensetzung pro Quadratmeter Klebefläche, insbesondere im Bereich von 80 g bis 150 g Heißschmelzklebstoffzusammensetzung pro Quadratmeter Klebefläche.

Das durch die Abkühlung erfolgende Erstarren und verfestigen des Klebstoffes bewirkt einen schnellen Festigkeitsaufbau und hohe Anfangshaftfestigkeit des Klebverbundes. Es ist dabei darauf zu achten, dass das Verkleben innerhalb der Zeit erfolgt, in der der Klebstoff noch nicht zu stark abgekühlt ist, d. h. das Verkleben erfolgt vorzugsweise, so lange der Klebstoff noch flüssig oder zumindest noch klebrig und verformbar ist.

Zusätzlich zu dieser physikalischen Verfestigung wird der Klebstoff nach dem Erkalten durch den Einfluss von Wasser, insbesondere von Luftfeuchtigkeit vernetzen und so innerhalb einer kurzen Zeit von typischerweise wenigen Stunden oder Tagen weiter an mechanischer Festigkeit gewinnen. Im Gegensatz zu den nicht reaktiven Heißschmelzklebstoffzusammensetzungen lässt sich die reaktive Heißschmelzklebstoffzusammensetzung nicht reversibel erhitzen und dadurch wieder verflüssigen. Somit ist der Einsatz von Heißschmelzklebstoffzusammensetzungen, umfassend silangepfropfte Poly-α-olefinen (P), für die Zwecke der vorliegenden Erfindung besonders vorteilhaft, da eine permanente Verklebung der Platten gewährleistet wird. Darüber hinaus bedingt die Vernetzung der Heißschmelzklebstoffzusammensetzung ein bedeutend weniger Kriechen.

Im Rahmen der vorliegenden Erfindung ist es besonders günstig, extrudierte Styrolpolymerschaumstoffplatten, insbesondere Polystyrolschaumstoffplatten, miteinander verklebt, deren Extrusionshaut vor der Verklebung nicht entfernt wurde. Dies führt zur Ausbildung von zusätzlichen Diffusionsbremsschichten im Verbundkörper (Klebeschicht, Extrusionshäute), die insbesondere bei beidseitiger Wassereinwirkung auf den Verbundkörper eine Feuchtigkeitsanreicherung im Kernbereich des Plattenverbunds verlangsamen und somit eine bessere Dämmwirkung über einen längeren Zeitraum gewährleisten. Andererseits ist bei ständigem einseitigem Wasserkontakt die Feuchteanreicherung im Verbundkörper vergleichbar mit einer gleich dicken einschichtigen Platte, da auf der Nassseite das Eindringen und auf der Trockenseite das Austrocknen von Feuchte gleichermaßen reduziert ist.

Zur Sicherstellung einer vollflächigen, zugfesten Verbindung kann eine Oberflächenbehandlung vorteilhaft sein. Dies kann zum Beispiel ein Reinigen oder ein Auftragen eines Primers darstellen. Bevorzugt ist in weniger anspruchsvollen Anwendungen jedoch das Aufbringen von Primern nicht notwendig.

Als besonders geeignet zur Herstellung einer hochwertigen, vollflächigen Verbindung für anspruchsvolle Anwendungen in nasser Umgebung hat sich die thermische Prägung beider zu verklebenden Oberflächen durch eine temperierte Walze mit vorzugsweise sandpapierartiger Oberflächenstruktur herausgestellt. Dabei wird die Platte vorzugsweise durch eine temperierte Stahlwalze mit Oberflächenstruktur (Negativ) und unstrukturierter Gegenwalze geführt, wodurch die Oberflächenstruktur auf die eine Plattenoberfläche übertragen wird (Positiv). Mit dem einstellbaren Spaltmass zwischen den beiden Walzen lässt sich gleichzeitig die Plattendicke "kalibrieren" bzw. einstellen. Zudem werden Unebenheiten der Plattenoberfläche korrigiert.

Für die Zwecke der vorliegenden Erfindung liegt die Körnung der Oberflächenstruktur bevorzugt zwischen 30 und 200. Die Oberflächentemperatur der Walze wird zweckmäßigerweise im Bereich von 130°C bis 160°C gewählt.

Der Schritt des Kontaktierens (iii) erfolgt vorzugsweise bei einer Klebstofftemperatur von 50°C oder mehr, insbesondere einer Temperatur zwischen 50°C und 200°C, bevorzugt zwischen 100°C und 150°C.

Im Rahmen der vorliegenden Erfindung unterstützt man das Verkleben der Styrolpolymerschaumstoffplatten vorzugsweise durch Anlegen eines Anpressdrucks, insbesondere zwischen 0,1 bar und 1 bar, bevorzugt von mindestens 0,8 bar.

Der erfindungsgemäß einzusetzende Kleber erlaubt die Herstellung von Styrolpolymerschaumstoff-Verbundkörpern mit exzellenter Früh- und Endfestigkeit. Dies erlaubt eine weitgehende Automatisierung des Herstellungsverfahrens und erlaubt insbesondere in einem Vorgang
i) einen extrudierten Kunststoffschaumstrang an den Breitseiten zu bearbeiten,
ii) an den Breitseiten mit Klebstoff zu beschichten,
iii) mit den Breitseiten und zwischenliegendem Klebstoff aufeinander zulegen und
iv) zu stapeln und einem Lager zuzuführen.

Bei der Handhabung müssen die übereinander liegenden Platten eine gewisse Fixierung besitzen. Die Fixierung wird durch die Frühfestigkeit des Klebstoffs bewirkt. Ohne die Frühfestigkeit besteht die Gefahr einer unerwünschten Verschiebung der Platten.

Die Platten werden vorzugsweise so übereinander gelegt, dass das entstehende Produkt eine mehrschichtige Kunststoffschaumplatte mit einem Stufenfalz am Rand oder mit einer Nut-Feder-Verbindung am Rand ist.

Ein Stufenfalz wird erhalten, wenn zwei Platten parallel zu den Breitseiten der Platten um ein Maß versetzt zueinander aufeinander gelegt werden, das der gewünschten Stufenbreite entspricht.

Eine Nut-Feder-Verbindung wird erhalten, wenn drei Platten übereinander gelegt werden, wobei die beiden äußeren Platten deckungsgleich angeordnet sind, während die mittlere Platte parallel zu ihren Breitseiten gegenüber den äußeren Platten um ein Maß verschoben ist, das der gewünschten Feder und der gewünschten korrespondierenden Nut entspricht.

Je nach Auslegung des Klebstoffs kann die Frühfestigkeit so groß sein, dass auch noch eine Bearbeitung der Schmalseiten an den Platten möglich ist.

Die erfindungsgemäß einsetzbare Heißschmelzklebstoffzusammensetzung zeichnet sich durch eine optimale Offenzeit aus, die Zeit, welche nach Aufbringen des Klebers für das Aufeinanderlegen der Platten zur Verfügung steht. Im einer bevorzugten Variante der vorliegenden Erfindung wird die Heißschmelzklebstoffzusammensetzung auf eine Offenzeit von wenigen Minuten eingestellt, z. B. von weniger als 30 min, vorzugsweise weniger als 15 min und noch weitere bevorzugt weniger als 10 min, insbesondere auf eine Zeit im Bereich von 3 min bis kleiner 10 min. Die Zeit ist einerseits ausreichend, um die Ausgangsplatten aufeinander zu legen und zu positionieren. Andererseits ist die Zeit ausreichend kurz, damit die Heißschmelzklebstoffzusammensetzung kurzfristig genug anzieht, um die so verbundenen Platten zu handhaben und gegebenenfalls zu bearbeiten.

Die erfindungsgemäße Heißschmelzklebstoffzusammensetzung ist durch dauerhafte Beständigkeit gekennzeichnet. Die Aushärtung kann nach etwa 24 Stunden abgeschlossen sein. Die Aushärtung kann auch länger dauern.

Die Verklebung wird durch Bewitterungseinflüsse, Wasser, hohe Temperatur, Frost-Tau-Wechsel nicht beeinflusst.

Im Rahmen einer besonders bevorzugten Variante der vorliegenden Erfindung werden zunächst Styrolpolymerschaumstoffplatten, bevorzugt Polystyrolschaumstoffplatten mit einem Raumgewicht von 30 kg/m³ bis 45 kg/m³, hergestellt. Dabei wird vorzugsweise in einem ersten Schritt mittels einer Tandem-Extrusionsanlage ein Endlos-Schaumstoffstrang erzeugt. Die Tandem-Extrusionsanlage besteht zweckmäßigerweise aus einem Primärextruder und einem Sekundärextruder. In dem Primärextruder wird ein Kunststoffgranulat mit den üblichen verschiedenen Additiven und Verarbeitungshilfen aufgeschmolzen und zu einer homogenen Schmelze vermischt. Die entstehende Schmelze wird mit Treibmittel versetzt und das Gemisch auf dem weiteren Weg durch den Extruder weiter homogenisiert. Daran schließt sich eine Abkühlung der Schmelze auf Extrusionstemperatur im Sekundärextruder. Im Sekundärextruder herrscht ein erheblicher Druck. Beim Austragen der Schmelze durch die Düse des Extruders findet eine Entspannung der Schmelze statt. Infolgedessen expandiert das Treibmittel und bildet in der Schmelze entsprechend seiner feinen Verteilung eine Vielzahl gleichmäßig verteilter Blasen/Zellen.

Im Rahmen einer weiteren besonders bevorzugten Variante der vorliegenden Erfindung wird anstelle einer Tandemanlage eine Extrusionsanlage mit einem einzigen Extruder eingesetzt. Es kann sich um Extruder verschiedener Bauart handelt, z. B. Einschneckenextruder oder Doppelschneckenextruder.

Die Schmelze wird hier in einem sogenannten Kalibrator geschäumt. Es handelt sich um Metallplatten, welche dem entstehenden Schaumstrang seine Dicke geben. Die Platten werden dann durch Ablängen des Schaumstrangs erhalten und können zweckmäßigerweise nach vorheriger Lagerung weiterverwendet werden, d. h. in erfindungsgemäßer Weise verbunden werden.

Als nächstes wird der Klebstoff durch Kaschieren oder Sprühen auf mindestens eine Oberfläche mindestens einer Platte aufgebracht.

Vorzugweise gelangen die Ausgangsplatten nach dem Kleberauftrag in eine weitere Station, in der sie vorzugsweise aufgerichtet und gegeneinander gedruckt werden. Zugleich findet eine Zentrierung der Ausgangsplatten aufeinander oder ein gewünschter Versatz der Ausgangsplatten gegeneinander statt.

Die verbundenen Platten werden dann einem Lager zugeführt.

Mögliche Anwendungsgebiete des erfindungsgemäßen Verbundkörpers umfassen seine Verwendung als Isolationsstoff, bevorzugt zur Isolierung von Gebäuden, insbesondere zur Wärmedämmung von Gebäuden.

## Patentansprüche

1. Verbundkörper, umfassend mindestens zwei Styrolpolymerschaumstoffplatten und eine dazwischen liegende, ggf. vernetzte Heißschmelzklebstoffzusammensetzung, **dadurch gekennzeichnet, dass** die Heißschmelzklebstoffzusammensetzung mindestens ein thermoplastisches, bei 25°C festes, silangepfropftes Poly-α-olefin (P) umfasst, welches ggf. nachträglich vernetzt wurde.

2. Verbundkörper nach Anspruch 1, **dadurch gekennzeichnet, dass** das silangepfropfte Poly-α-olefin (P) eine Erweichungstemperatur zwischen 70°C und 150°C, insbesondere zwischen 80°C und 120°C, bevorzugt zwischen 90°C und 110°C, aufweist.

3. Verbundkörper nach Anspruch 1 oder 2, **dadurch gekennzeichnet, dass** das silangepfropfte Poly-α-olefin (P) ein silangepfropftes Polyethylen oder Polypropylen ist.

4. Verbundkörper nach mindestens einem der vorangehenden Ansprüche, **dadurch gekennzeichnet, dass** die Heißschmelzklebstoffzusammensetzung weiterhin ein bei 25°C festes, thermoplastisches Poly-α-olefin (P'), insbesondere ein ataktisches Poly-α-olefin (APAO), enthält.

5. Verbundkörper nach mindestens einem der vorangehenden Ansprüche, **dadurch gekennzeichnet, dass** die Heißschmelzklebstoffzusammensetzung weiterhin mindestens ein Weichharz (WH) mit einem Schmelzpunkt oder Erweichungspunkt zwischen -10°C und 40°C, bevorzugt 0°C und 25°C, insbesondere 10°C und 25°C, umfasst.

6. Verbundkörper nach Anspruch 5, **dadurch gekennzeichnet, dass** das Weichharz (WH) ein Kohlenwasserstoffharz, insbesondere ein aliphatisches C₅-C₉-Kohlenwasserstoffharz ist.

7. Verbundkörper nach Anspruch 5 oder 6, **dadurch gekennzeichnet, dass** die Menge an Weichharz (WH) 20 - 40 Gew.-%, insbesondere 25 - 35 Gew.-%, bezogen auf die Heißschmelzklebstoffzusammensetzung beträgt.

8. Verbundkörper nach mindestens einem der vorangehenden Ansprüche, **dadurch gekennzeichnet, dass** die Heißschmelzklebstoffzusammensetzung mindestens einen bei 25°C festen, thermoplastischen Polyester (TPE) und mindestens ein Amid der Formel (I) oder (II) umfasst, wobei R¹ für H, eine C₁-C₄-Alkylgruppe oder eine Benzylgruppe steht, R² für eine gesättigte oder ungesättigte C₈-C₂₂-Alkylgruppe steht.

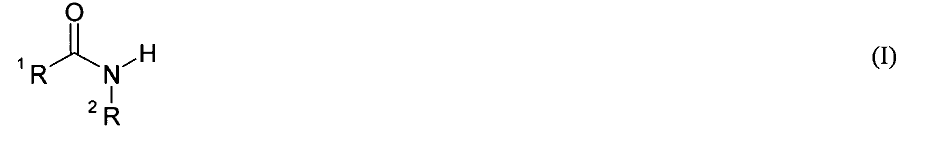

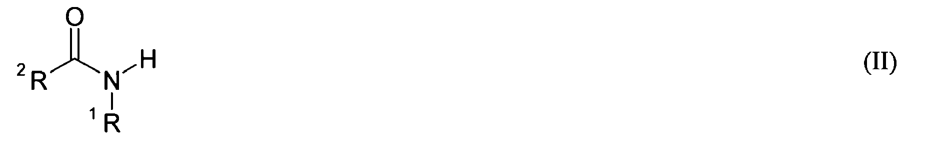

9. Verbundkörper nach mindestens einem der vorangehenden Ansprüche, **dadurch gekennzeichnet, dass** es sich bei den Styrolpolymerschaumstoffplatten um extrudierte Polystyrolschaumstoffplatten handelt.

10. Verfahren zum Verkleben von mindestens zwei Styrolpolymerschaumstoffplatten, **dadurch gekennzeichnet, dass** man
(i) eine Heißschmelzklebstoffzusammensetzung aufschmilzt und/oder in einen fließfähigen Zustand überführt, die mindestens ein bei 25°C festes, silangepfropftes Poly-α-olefin (P) umfasst,
(ii) die geschmolzene Heißschmelzklebstoffzusammensetzung auf einer ersten Styrolpolymerschaumstoffplatte aufbringt,
(iii) die geschmolzene Heißkleberzusammensetzung auf der der ersten Platte abgewandten Seite mit einer zweiten Styrolpolymerschaumstoffplatte in Kontakt bringt,
(iv) die geschmolzene Heißschmelzklebstoffzusammensetzung ggf. auskühlen und aushärten lässt.
(v) die Auftragsmenge 40 g/m² bis 250 g/m², bevorzugt 80 g/m² bis 150 g/m², beträgt.

11. Verfahren nach Anspruch 10, **dadurch gekennzeichnet, dass** man das Verkleben der Styrolpolymerschaumstoffplatten durch Anlegen eines Anpressdrucks, insbesondere zwischen 0,1 bar und 1 bar, bevorzugt von mindestens 0,8 bar, unterstützt.

12. Verfahren nach Anspruch 10 oder 11, **dadurch gekennzeichnet, dass** man extrudierte Styrolpolymerschaumstoffplatten miteinander verklebt, deren Extrusionshaut vor der Verklebung nicht entfernt wurde.

13. Verfahren nach einem der Ansprüche 10 bis 12, **dadurch gekennzeichnet, dass** man extrudierte Styrolpolymerschaumstoffplatten miteinander verklebt, deren Oberflächen vorbehandelt wurden.

14. Verfahren nach Anspruch 13, **dadurch gekennzeichnet, dass** die Oberflächenbehandlung durch thermische Prägung erfolgt, bevorzugt durch eine temperierte Prägewalze mit Sandpapierstruktur, die vorzugsweise eine Körnung im Bereich von 30 bis 200 aufweist, und einer Oberflächentemperatur zwischen 130°C und 160 °C.

15. Verwendung eines Verbundkörpers gemäß mindestens einem der Ansprüche 1 bis 9 zum Isolieren von Gebäuden.
